# EUROPEAN PATENT APPLICATION

(11) **EP 4 089 776 A1**
(43) Date of publication of application: **16.11.2022**
(21) Application number: 21187326.0
(22) Date of filing: 23.07.2021
(51) Int. Cl.: H01M 10/04, H01M 10/058, H01M 50/103, H01M 50/131, H01M 50/169

(54) **BATTERY, BATTERY APPARATUS, AND BATTERY MANUFACTURING METHOD**

(30) Priority: 14.05.2021 CN 202110528538
(71) Applicant: CALB Co., Ltd., Changzhou City, Jiangsu Province (CN)
(72) Inventor: PAN, Fangfang, Changzhou City, Jiangsu Province (CN); XU, Jiuling, Changzhou City, Jiangsu Province (CN); QI, Binwei, Luoyang City, Henan Province (CN); ZHANG, Yongjie, Luoyang City, Henan Province (CN)
(74) Representative: Becker, Eberhard

(57) **Abstract**

The disclosure provides a battery, a battery apparatus and a battery manufacturing method. The battery manufacturing method includes: providing a first housing (10) including an intermediate part and a first flange (11), and the intermediate part being a flat plate; or the intermediate part including a top wall and a first side wall enclosing a first accommodating cavity (121) having an opening; providing a second housing (20) including a bottom wall and a second side wall enclosing a second accommodating cavity (221) having an opening, the second side wall extending outward from the opening of the second accommodating cavity (221) to form a second flange (21), the depth of the first accommodating cavity (121) being smaller than the depth of the second accommodating cavity (221); disposing a welding head at a side of the first housing (10) away from the second housing (20), and welding the first flange (11) and the second flange (21).

## Description

### BACKGROUND

### 1. Technical Field

The disclosure relates to the field of battery technology, in particular to a battery, a battery apparatus, and a battery manufacturing method.

### 2. Description of Related Art

The battery in the related art includes a cell and a housing component. After the assembly of the cell, it is necessary to assemble the housing components, namely to assemble the battery housing and the cover plate. Due to the structural limitations of the battery housing and the cover plate itself, it is difficult to weld the two.

### SUMMARY

The disclosure provides a battery, and a battery manufacturing method.

According to a first aspect of the disclosure, there is provided a battery manufacturing method, including: providing a first housing, the first housing including an intermediate part and a first flange, and the intermediate part being a flat plate; or the intermediate part including a top wall and a first side wall, the first side wall extending downward from the top wall, and the first side wall enclosing a first accommodating cavity having an opening; providing a second housing, the second housing including a bottom wall and a second side wall, the second side wall extending upward from the bottom wall, the second side wall enclosing a second accommodating cavity having an opening, the second side wall extending outward from the opening of the second accommodating cavity to form a second flange, a depth of the first accommodating cavity being smaller than a depth of the second accommodating cavity, and the intermediate part covering the opening of the second accommodating cavity; and disposing a welding head at a side of the first housing away from the second housing, and welding the first flange and the second flange.

According to a second aspect of the disclosure, there is provided a battery including: a first housing, the first housing including an intermediate part and a first flange, and the intermediate part being a flat plate; or the intermediate part including a top wall and a first side wall, the first side wall extending downward from the top wall, and the first side wall enclosing a first accommodating cavity having an opening; a second housing, the second housing including a bottom wall and a second side wall, the second side wall extending upward from the bottom wall, the second side wall enclosing a second accommodating cavity having an opening, the second side wall extending outward from the opening of the second accommodating cavity to form a second flange, a depth of the first accommodating cavity being smaller than a depth of the second accommodating cavity, and the intermediate part covering the opening of the second accommodating cavity; a cell, the first flange and the second flange welded to seal the cell between the first housing and the second housing; wherein a depth of the first accommodating cavity is smaller than a depth of the second accommodating cavity.

### BRIEF DESCRIPTION OF THE DRAWINGS

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.
Figure 1 is a schematic flow chart showing a battery manufacturing method according to an exemplary embodiment.
Figure 2 is a schematic structural flow diagram showing a battery manufacturing method according to an exemplary embodiment.
Figure 3 is a schematic diagram showing a partial exploded structure of a battery according to an exemplary embodiment.
Figure 4 is a schematic diagram showing a partial cross-sectional structure of a battery according to an exemplary embodiment.

### DESCRIPTION OF THE EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

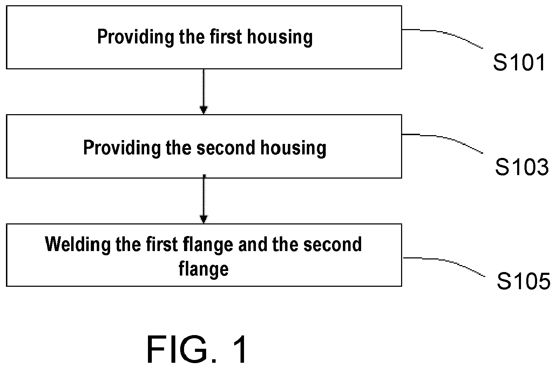

An embodiment of the disclosure provides a battery manufacturing method. Referring to Figure 1, the battery manufacturing method includes the following.

(S101) Provide a first housing 10, the first housing 10 including an intermediate part and a first flange 11, and the intermediate part being a flat plate; or, the intermediate part including a top wall and a first side wall, the first side wall extending downward from the top wall, and the first side wall enclosing a first accommodating cavity 121 having an opening.

(S103) Provide a second housing, the second housing 20 including a bottom wall and a second side wall, the second side wall extending upward from the bottom wall, and the second side wall surrounds a second accommodating cavity 221 having an opening, the second side wall extending outward from the opening of the second accommodating cavity 221 to form a second flange 21, the depth of the first accommodating cavity 121 being smaller than the depth of the second accommodating cavity 221, and the intermediate part covering the opening of the second accommodating cavity 221.

(S105) Dispose the welding head at a side of the first housing 10 away from the second housing 20, and welding the first flange 11 and the second flange 21.

In the battery manufacturing method according to an embodiment of the disclosure, the depth of the first accommodating cavity 121 of the first housing 10 is made smaller than the depth of the second accommodating cavity 221 of the second housing 20, such that when welding the first flange 11 and the second flange 21, the welding head 2 may be located at a side of the first housing 10 away from the second housing 20; that is, the first housing 10 with a relatively shallow depth may allow certain room for the welding head 2, such that the welding head 2 is as close as possible to the first housing 10 when welding the first flange 11 and the second flange 21. Therefore, the weld seam 3 formed on the first flange 11 and the second flange 21 may also be away from the circumferential outer edges of the first flange 11 and the second flange 21, so as to ensure the welding effect.

It should be noted that the first housing 10 includes the first flange 11 and a first main body 12, and the first flange 11 is disposed on the first main body 12. In other words, the first main body 12 includes the intermediate part. The first main body 12 may be a flat plate, and the first flange 11 is disposed around the circumferential outer edge of the flat plate so as to form a circumferentially closed structure. Alternatively, the first main body 12 has a first accommodating cavity 121. In other words, the intermediate part includes a top wall and a first side wall, wherein the first side wall extends downward from the top wall, and the first side wall encloses a first accommodating cavity 121 having an opening.

The second housing 20 includes the second flange 21 and a second main body 22. The second flange 21 is disposed on the second main body 22. The second main body 22 has the second accommodating cavity 221. In other words, the second main body 22 includes a bottom wall and a second side wall, wherein the second side wall extends upward from the bottom wall, and the second side wall encloses a second accommodating cavity 221 having an opening. The second side wall extends outward from the opening of the second accommodating cavity 221 so as to form a second flange 21.

Note that because the size of the welding head 2 is relatively large, if the welding head 2 is completely placed at a side of the first main body 12, the weld seam 3 formed on the first flange 11 and the second flange 21 will be away from the first main body 12 and the second main body 22. If the welding head 2 is partially placed at a top of the first main body 12, only the welding tip is located at a side of the first main body 12 and the second main body 22, and the weld seam 3 formed on the first flange 11 and the second flange 21 will be close to the first main body 12 and the second main body 22. If the depth of the first accommodating cavity 121 is the same as the depth of the second accommodating cavity 221, when the welding head 2 is partially placed at the top of the first main body 12, only the welding tip is located at a side of the first main body 12 and the second main body 22, and the distance between the welding tip and the first flange 11 and the second flange 21 will be larger, thus the energy density will be affected and the welding quality is relatively poor. In the disclosure, the depth of the first accommodating cavity 121 is made smaller than the depth of the second accommodating cavity 221. Therefore, when the welding head 2 is partially placed on the top of the first main body 12, only the welding tip is located at a side of the first main body 12 and the second main body 22, and the distance between the welding tip and the first flange 11 and the second flange 21 will be small, so reliable energy density can be ensured, thereby achieving a good welding effect.

Further, the depth of the first accommodating cavity 121 is smaller than the depth of the second accommodating cavity 221, such that when the first flange 11 and the second flange 21 are welded, the welding head 2 is partially located at a side of the first main body 12 away from the second housing 20. That is, the welding tip of the welding head 2 is as close as possible to the first main body 12, so as to achieve a better welding effect.

The first flange 11 and the second flange 21 are a circumferentially closed structure. That is, after the first flange 11 and the second flange 21 are welded, the first accommodating cavity 121 and the second accommodating cavity 221 are reliably closed.

It should be noted that the first housing 10 and the second housing 20 are provided in no particular order.

In one embodiment, the battery manufacturing method further includes: after welding the first flange 11 and the second flange 21, partially cutting the first flange 11 and the second flange 21, so as to reduce lengths of the first flange 11 and the second flange 21, thereby reducing the area occupied by the battery in the circumferential direction. A certain length may be reserved in the first flange 11 and the second flange 21. At this time, the reserved first flange 11 and the second flange 21 may serve as heat dissipation fins. They may also serve as heat dissipation fins for subsequent installation of the positioning components; no limitation is imposed herein.

In some embodiments, all the first flange 11 and the second flange 21 may be reserved in full.

In one embodiment, the first flange 11 and the second flange 21 are cut by laser. A laser cutting head 4 is located at a side of the first housing 10 away from the second housing 20, so as to ensure that the first flange 11 and the second flange 21 may be removed to the greatest extent when laser cutting the first flange 11 and the second flange 21, thereby reducing the reserved lengths of the first flange 11 and the second flange 21.

Further, the depth of the first accommodating cavity 121 is smaller than the depth of the second accommodating cavity 221, such that when laser cutting the first flange 11 and the second flange 21, the laser cutting head 4 is partially located at a side of the first main body 12 away from the second housing 20, such that the cutting nozzle of the laser cutting head 4 may be as close as possible to the first main body 12, so as to cut the first flange 11 and the second flange 21 to the greatest extent.

It should be noted that when cutting the first flange 11 and the second flange 21, it is better not to cut the weld seam 3 on the first flange 11 and the second flange 21, so as to ensure the connection strength of the first flange 11 and the second flange 21. In some embodiments, cutting part of the weld seam 3 on the first flange 11 and the second flange 21 may also be possible.

In one embodiment, the depth of the first accommodating cavity 121 is not greater than 3 mm, such that the welding head 2 or the laser cutting head 4 may be avoided to the greatest extent on the basis of ensuring that the first housing 10 will not be deformed.

In an embodiment, at least one of the first housing 10 and the second housing 20 is formed by stamping a flat plate 1. In other words, by selecting the flat plate 1, and stamping out the first accommodating cavity 121 or the second accommodating cavity 221 by a stamping process to form the first housing 10 or the second housing 20, the portion of the flat plate that is not stamped forms the first flange 11 or the second flange 21. In the specific stamping process, a supporting platform with a groove may be selected, such that the accommodating cavity may be formed by stamping; that is, the first housing 10 or the second housing 20 is formed, and the unstamped flat plate forms the flange.

It should be noted that since the depth of the first accommodating cavity 121 is smaller than the depth of the second accommodating cavity 221, the sizes of the flat plates to form the first housing 10 and the second housing 20 are different.

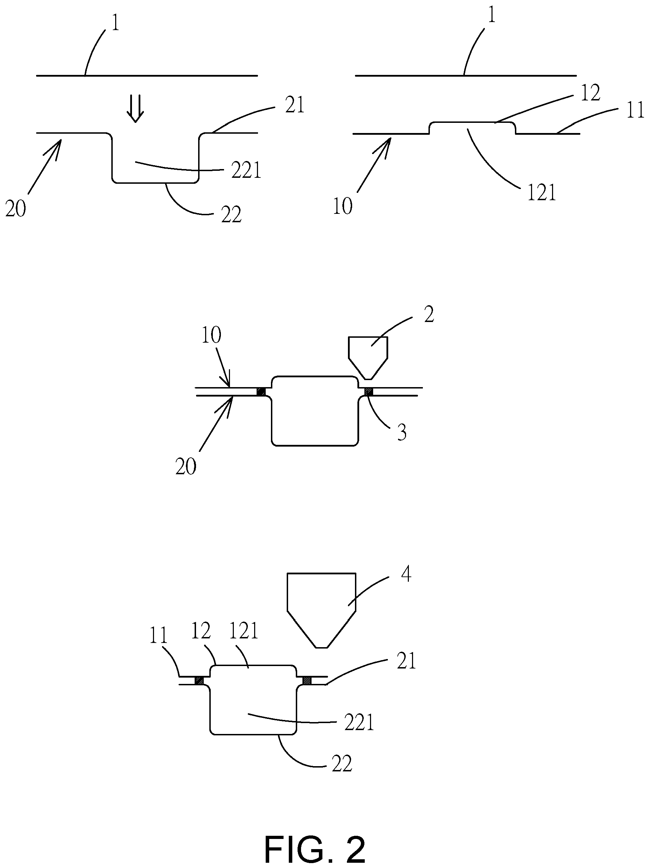

In one embodiment, as shown in Figure 2, the flat plate 1 is provided, and the flat plate 1 is stamped to form the first housing 10 and the second housing 20. The first housing 10 and the second housing 20 are welded by the welding head 2 so as to form the weld seam 3. The first flange 11 and the second flange 21 are partially cut by the laser cutting head 4.

Optionally, the material of the first housing 10 and the second housing 20 may be stainless steel or aluminum, which has good corrosion resistance and sufficient strength.

The thickness of the first housing 10 is uniform, which not only has strong structural ability, but also facilitates processing. The thickness of the second housing 20 is uniform, and the thickness of the first housing 10 may be equal to the thickness of the second housing 20.

In one embodiment, before welding the first flange 11 and the second flange 21, a cell 30 is disposed between the first housing 10 and the second housing 20, such that after the first housing 10 and the second housing 20 are welded, the cell 30 is sealed and the position of the cell 30 is also fixed.

In one embodiment, the cell 30 is a laminated cell, which is not only convenient for assembly, but also may be processed to obtain a longer battery. The cell 30 has a first electrode sheet laminated with each other, a second electrode sheet electrically opposite to the first electrode sheet, and a separator film disposed between the first electrode sheet and the second electrode sheet, such that multiple pairs of first electrode sheet and the second electrode sheet are stacked to form a laminated cell.

Optionally, the battery may be a winding battery. In other words, the first electrode sheet, the second electrode sheet that is electrically opposite to the first electrode sheet, and the separator film disposed between the first electrode sheet and the second electrode sheet are winding, so as to obtain a winding battery.

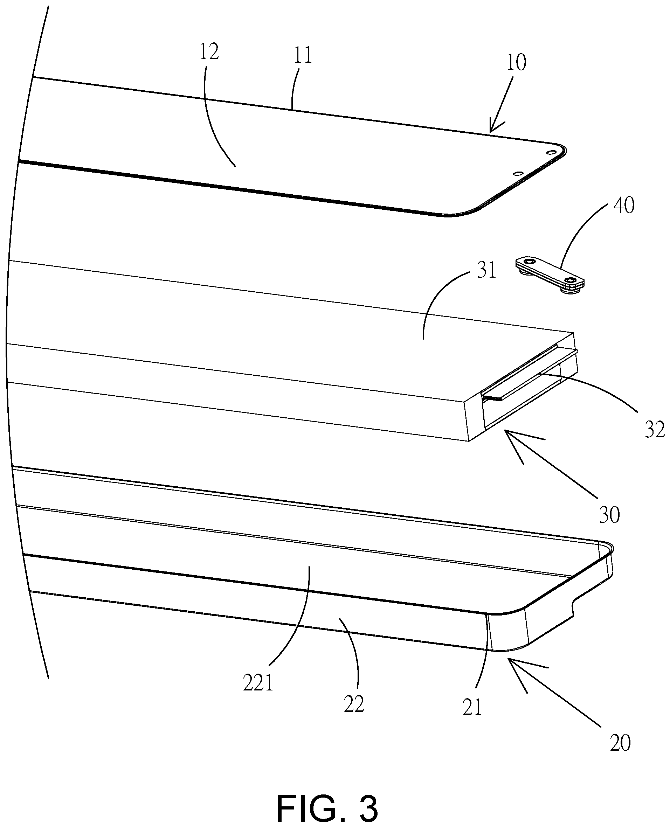

In one embodiment, as shown in Figure 3, the cell 30 includes a cell body 31 and a tab portion 32, and the tab portion 32 extends from the length direction of the cell body 31.

A pole subassembly 40 is disposed on the first housing 10 or the second housing 20. Before welding the first flange 11 and the second flange 21, the tab portion 32 is connected with the pole subassembly 40, wherein the tab portion 32 and the pole subassembly 40 may be directly connected. In other words, the tab portion 32 and the pole subassembly 40 may be directly welded. Alternatively, the tab portion 32 and the pole subassembly 40 may be connected by a metal switching piece, and the specific connection method may be welding, the use of riveting, or the like; no limitation is imposed herein.

It should be noted that the cell body 31 includes more than two electrode sheets. The tab portion 32 includes more than two single-piece tabs, and the single-piece tabs respectively extend from the corresponding electrode sheets, the width of the single-piece tab is smaller than the width of the electrode sheet. Multiple single-piece tabs are stacked to form the tab portion 32, which is connected with the pole subassembly 40, wherein the tab portion 32 may be welded to the pole subassembly 40. The single-piece tabs are made of metal foil with good electrical and thermal conductivity, such as aluminum, copper, or nickel.

In some embodiments, there are two pole subassemblies 40; the two pole subassemblies 40 are respectively a positive pole subassembly and a negative pole subassembly. There are also two tab portions 32, and the two tab portions 32 are respectively a positive tab portion and a negative tab portion. The positive pole subassembly is connected with the positive tab portion, and the negative pole subassembly is connected with the negative tab portion.

It should be noted that the above-mentioned welding may be any one of laser welding, ultrasonic welding, and resistance welding.

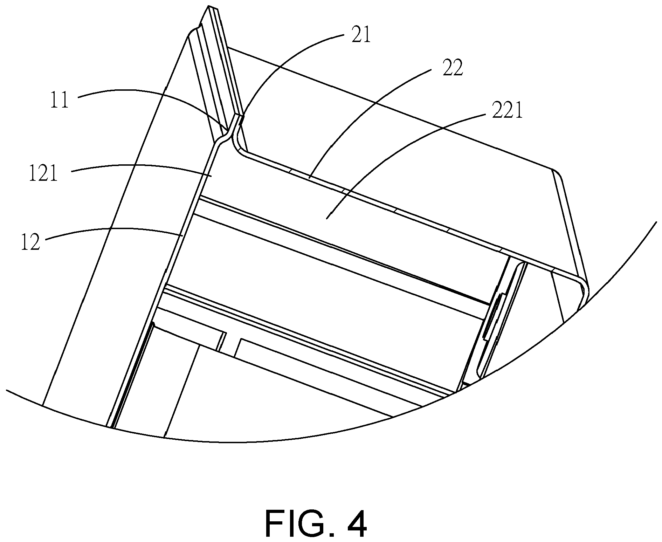

An embodiment of the disclosure further provides a battery. Referring to Figures 3 and 4, the battery includes: the first housing 10, the first housing 10 including the intermediate part and the first flange 11, and the intermediate part being the flat plate; or the intermediate part including a top wall and the first side wall, the first side wall extending downward from the top wall, and the first side wall enclosing the first accommodating cavity 121 having an opening; the second housing 20, the second housing 20 including the bottom wall and the second side wall, the second side wall extending upward from the bottom wall, the second side wall enclosing the second accommodating cavity 221 having the opening, and the second side wall extending outward from the opening of the second accommodating cavity 221 to form the second flange 21, the depth of the first accommodating cavity 121 being smaller than the depth of the second accommodating cavity 221, and the intermediate part covering the opening of the second accommodating cavity 221; the cell 30, the first flange 11 and the second flange 21 welded to seal the cell 30 between the first housing 10 and the second housing 20; wherein the depth of the first accommodating cavity 121 is smaller than the depth of the second accommodating cavity 221.

The battery of an embodiment of the disclosure includes a first housing 10, a second housing 20, and a cell 30. The cell 30 is sealed between the first housing 10 and the second housing 20. That is, the cell 30 is located in the cavity formed by the first accommodating cavity 121 of the first housing 10 and the second accommodating cavity 221 of the second housing 20. The depth of the first accommodating cavity 121 is made smaller than the depth of the second accommodating cavity 221, such that when welding the first flange 11 and the second flange 21, the welding head 2 may be located in the first housing 10 away from one side of the second housing 20; that is, the first housing 10 with a relatively shallow depth may allow certain room for the welding head 2, such that the welding head 2 may be as close as possible to the first housing 10 when welding the first flange 11 and the second flange 21. Therefore, the weld seam 3 formed on the first flange 11 and the second flange 21 may also be away from the circumferential outer edges of the first flange 11 and the second flange 21, so as to ensure the welding effect.

In one embodiment, the depth of the first accommodating cavity 121 is not greater than 3 mm, such that the welding head 2 or the laser cutting head 4 may be avoided to the greatest extent on the basis of ensuring that the first housing 10 will not be deformed.

In one embodiment, the side wall of the first accommodating cavity 121 is curved or inclined, so as to facilitate the forming of the first housing 10. Also, deformation can be avoided while ensuring the strength of the first housing 10, thereby facilitating the assembly of the battery.

In one embodiment, the cell 30 is a laminated cell, which not only is convenient for assembly, but also may be processed to obtain a battery of longer length.

The battery further includes the pole subassembly 40. The pole subassembly 40 is disposed on the first housing 10 or the second housing 20, and the pole subassembly 40 is connected to the cell 30.

It should be noted that for the correlation between the cell 30 and the pole subassembly 40, reference may be made to the above-mentioned embodiment; details will not be repeated here.

Optionally, the battery has an approximate rectangular structure. In other words, while ignoring processing and manufacturing errors, the battery may have a rectangular structure.

In one embodiment, a length of the battery is a, wherein 400mm≤a≤2500mm. A width of the battery is b, and a height of the battery is c, wherein 2b≤a≤50b and/or 0.5c≤b≤20c.

Further, 50mm≤b≤200mm, and 10mm≤c≤100mm.

Further, 4b≤a≤25b, and/or 2c≤b≤10c.

In the battery in the above embodiment, under the condition that sufficient energy density is ensured, a ratio of the battery length to the width is large, and further, a ratio of the battery width to the height is large.

In one embodiment, a length of the battery is a, a width of the battery is b, and a height of the battery is c, wherein 4b≤a≤7b, and/or 3c≤b≤7c.

In one embodiment, a length of the battery is a, and a width of the battery is b, wherein 4b≤a≤7b. That is, a ratio of the length to the width of the battery in the present embodiment is larger, thereby increasing the energy density of the battery and facilitating the subsequent formation of the battery module.

In one embodiment, the height of the battery is c, wherein 3c≤b≤7c, and a ratio of the battery width to the height is larger, which also ensures formation of the battery module while ensuring sufficient energy density.

Optionally, a length of the battery may be 500mm-1500mm, a width of the battery may be 80mm-150mm, and a height of the battery may be 15mm-25mm.

In one embodiment, the battery is obtained by the above-mentioned battery manufacturing method.

An embodiment of the disclosure also provides a battery apparatus including the above-mentioned battery.

The battery of the battery apparatus according to an embodiment of the disclosure includes a first housing 10, a second housing 20, and a cell 30. The cell 30 is sealed between the first main body 12 and the second main body 22. That is, the cell 30 is located in the cavity formed by the first accommodating cavity 121 of the first housing 10 and the second accommodating cavity 221 of the second housing 20. The depth of the first accommodating cavity 121 is made smaller than the depth of the second accommodating cavity 221, such that when welding the first flange 11 and the second flange 21, the welding head may be located in the first housing 10 away from one side of the second housing 20; that is, the first housing 10 with a relatively shallow depth may allow certain room for the welding head, such that the welding head is as close as possible to the first housing 10 when welding the first flange 11 and the second flange 21. Therefore, the weld seam formed on the first flange 11 and the second flange 21 may also be away from the circumferential outer edges of the first flange 11 and the second flange 21, so as to ensure the welding effect.

In some embodiments, the battery apparatus includes at least two batteries, and the at least two batteries are disposed side by side to form a battery apparatus.

It should be noted that the battery apparatus may be a battery module or a battery pack.

Optionally, the battery pack includes at least two battery modules, and the battery pack may also include a case, and the at least two battery modules are disposed in the case. Alternatively, multiple batteries may be directly disposed in the case; that is, the packing process is cancelled.

Throughout the disclosure, the term "cell' refers to a minimum unit which includes an electrode assembly and an electrolyte and is capable of electrochemical reaction, such as charge/discharge. The term "battery" refers to a unit which includes at least one cell.

Other embodiments of the disclosure will be apparent to those skilled in the art from consideration of the specification and practice of the disclosure disclosed herein. The disclosure is intended to cover any variations, uses or adaptations of the disclosure. These variations, uses, or adaptations follow the general principles of the disclosure and include common general knowledge or conventional technical means in the art that are not disclosed in the present disclosure. The specification and embodiments are illustrative, and the real scope and spirit of the present disclosure is defined by the appended claims.

It should be understood that the disclosure is not limited to the precise structures that have been described above and shown in the drawings, and various modifications and variations can be made without departing from the scope thereof. The scope of the disclosure is limited only by the appended claims.

## Claims

1. A battery manufacturing method, comprising:
proving a first housing (10), the first housing (10) comprising an intermediate part and a first flange (11), and the intermediate part being a flat plate; or the intermediate part comprising a top wall and a first side wall, the first side wall extending downward from the top wall, and the first side wall enclosing a first accommodating cavity (121) having an opening;
proving a second housing (20), the second housing (20) comprising a bottom wall and a second side wall, the second side wall extending upward from the bottom wall, the second side wall enclosing a second accommodating cavity (221) having an opening, the second side wall extending outward from the opening of the second accommodating cavity (221) to form a second flange (21), a depth of the first accommodating cavity (121) being smaller than a depth of the second accommodating cavity (221), and the intermediate part covering the opening of the second accommodating cavity (221); and
disposing a welding head at a side of the first housing (10) away from the second housing (20), and welding the first flange (11) and the second flange (21).

2. The battery manufacturing method according to claim 1, further comprising:
cutting a portion of the first flange (11) and a portion of the second flange (21) after welding the first flange (11) and the second flange (21).

3. The battery manufacturing method according to claim 2, comprising laser cutting the first flange (11) and the second flange (21); and
locating the laser cutting head at a side of the first housing (10) away from the second housing (20).

4. The battery manufacturing method according to claim 1, wherein a depth of the first accommodating cavity (12) is not greater than 3 mm.

5. The battery manufacturing method according to claim 1, wherein at least one of the first housing (10) and the second housing (20) is formed by stamping a flat plate.

6. The battery manufacturing method according to claim 1, wherein before welding the first flange (11) and the second flange (21), a cell (30) is disposed between the first housing (10) and the second housing (20) so as to seal the cell (30) after the first housing (10) and the second housing (20) are welded.

7. A battery, comprising:
a first housing (10), the first housing (10) comprising an intermediate part and a first flange (11), and the intermediate part is a flat plate; or the intermediate part comprising a top wall and a first side wall, the first side wall extending downward from the top wall, and the first side wall enclosing a first accommodating cavity (121) having an opening;
a second housing (20), the second housing (20) comprising a bottom wall and a second side wall, the second side wall extending upward from the bottom wall, the second side wall enclosing a second accommodating cavity (221) having an opening, the second side wall extending outward from the opening of the second accommodating cavity (221) to form a second flange (21), a depth of the first accommodating cavity (121) being smaller than a depth of the second accommodating cavity (221), and the intermediate part covering an opening of the second accommodating cavity (221);
a cell (30), the first flange (11) and the second flange (21) welded to seal the cell (30) in the first housing (10) and the second housings (20); wherein
a depth of the first accommodating cavity (121) is smaller than a depth of the second accommodating cavity (221).

8. The battery according to claim 7, wherein a depth of the first accommodating cavity (121) is not greater than 3 mm.

9. The battery according to claim 8, wherein the side wall of the first accommodating cavity (121) is curved or inclined.

10. The battery according to any one of claims 7-9, wherein a length of the battery is a, a width of the battery is b, and a height of the battery is c, wherein 2b≤a≤50b, and/or 0.5 c≤b≤20c; and
400mm≤a≤2500mm.

11. A battery apparatus, comprising a battery according to any one of claims 7-10.
